# EUROPEAN PATENT APPLICATION

(11) **EP 4 548 790 A1**
(43) Date of publication of application: **07.05.2025**
(21) Application number: 23206747.0
(22) Date of filing: 30.10.2023
(51) Int. Cl.: A41G 5/02, B33Y 80/00

(54) **TRIMMING OF ARTIFICIAL EYELASHES**

(71) Applicant: GEKA GmbH, 91572 Bechhofen (DE)
(72) Inventor: Schuster, Erwin, 91572 Bechhofen (DE); Zhang, Hanju, Shanghai, 200245 (CN)
(74) Representative: Misselhorn, Hein-Martin

(57) **Abstract**

Trimming (1) of artificial eyelashes consisting of an eyelash band (3) for fastening the trimming to the eyelid and artificial eyelashes (2) projecting therefrom, wherein the artificial eyelashes positioned individually and at a distance from one another on the eyelash band.

## Description

### FIELD OF INVENTION

The invention relates to a trimming of artificial eyelashes according to the generic term of claim 1.

### TECHNICAL BACKGROUND

Fake eyelashes have become increasingly popular in the beauty world. Long, luscious eyelashes were mostly a trend for women throughout all of western history and women would go to extreme lengths to achieve this look.

Regardless of the country and tradition, women around the world have for centuries attached great importance to their appearance. The focus is very often on emphasizing the eye area, after all, even today they say "the eyes are the mirror of the soul". If they are properly emphasized, they give the whole face an expressive appearance. To give the eyes more expression, women used to use minerals and other similar materials, such as coal but also oils and juices. Throughout history, the main focus has been increasingly placed on the eyelashes. Shorter and thinner eyelashes were initially mascaraed to accentuate them and make them appear visually thicker and longer.

The demand for beautiful, thick and long eyelashes has sooner or later led to the creation or development of fake eyelashes in combination with eyelash extensions. Nowadays, many women cannot imagine their everyday life without this cosmetic beautification and regularly visit a beautician who has mastered the art of eyelash extensions and/or applying fake eyelashes.

The history of eyelash extensions begins at the beginning of the 20th century. Fake eyelashes were invented by none other than Max Factor in 1927 when he conjured up make-up with fake eyelashes for the actress Phyllis Haver for her appearance in the musical "Chicago". The effect achieved by these fake eyelashes was so outstanding that this invention first established itself in the film world and became a real trend. At the beginning of the history of eyelash extensions Max Factor used fringes, which he glued on a very thin thread, so that they could be attached to the lash line.

Nowadays, fake eyelashes come in a variety of styles, made with all sorts of materials such as mink, fox fur, human hair and synthetic plastics. It is common with fake eyelash arches that several artificial eyelashes are bundled in a knot and thus a whole fake eyelash arch usually consists of several bundles of artificial eyelashes, wherein each bundle is attached to a knot along the eyelash arch. That makes the commonly used fake eyelashes and fake eyelash arches look unnatural. Furthermore, this way of producing fake eyelashes limits the design possibilities for fake eyelashes and also often leads to an expensive production.

### OBJECT OF THE INVENTION

Accordingly, it is the object of the invention to provide a means by which fake eyelashes can be manufactured in a simple manner to look more natural or, instead, more spectacular.

### SOLUTION ACCORDING TO THE INVENTION

A solution to this problem is provided by the main claim.

Here, a trimming of artificial eyelashes consisting of an eyelash band for fastening the trimming to the eyelid and artificial eyelashes projecting therefrom is proposed. Said trimming is characterized in that the artificial eyelashes are positioned individually and at a distance from one another on the eyelash band.

An arrangement of eyelashes like this makes the artificial eyelashes and the whole trimming look more natural, as the natural growing of lashes, is that per pore one lash is growing. Furthermore, with an arrangement like this, a cheap and simple production of the whole trimming is possible, especially with the help of additive manufacturing.

### PREFERRED DESIGN OPTIONS OF THE INVENTION

A preferred design option is that the artificial eyelashes are an integral part of the eyelash band. Therefore, the trimming does not include a knot which the eyelashes are attached to - like already described in the section of the technical background. This leads to a more natural look of the artificial eyelashes and the trimming.

It is also preferred that the artificial eyelashes are made of the same material as the eyelash band. This simplifies the production of the trimming and also leads to a more natural looking result.

Furthermore, it is preferred that that the respective artificial eyelash - at least in the transition area between the eyelash band and the respective artificial eyelash - consists of the same material as the eyelash band. Once more, this simplifies the production of the trimming and also leads to a more natural looking result. Said "transition area" is the area around the root of an artificial eyelash; preferably a spherical shaped around the point where the artificial eyelash or the longitudinal axis of the artificial eyelash meets the eyelash band with a diameter of at least 2mm, preferably at least 4 mm.

It is also preferred that the eyelash band is a flat band or tape which, in the applied state, has an extension in the direction of the surface of the eyelid which is at least four times greater than its thickness in the direction perpendicular to the surface of the eyelid. The comparably big extension in the direction of the eyelid - and therefore also the side which is attached to the eyelid - leads to a secure fit to the eyelid. Because the eyelash band is also thin, the trimming can be incorporated with eyeshadow or other cosmetics in order to make the eyelash band part of the look or also make it look more unobtrusive.

It is also preferred that that the eyelash band is a flat band and the artificial eyelashes project from a narrow side of the eyelash band. Therefore, the artificial eyelashes preferably protrude from either the side opposing the side that is attached to the eyelid or one of the sides perpendicular to it.

It is also preferred that the eyelash band and the artificial eyelashes are produced together by 3D printing and have a surface texture, each which makes the 3D printing visible. In this way, the production of the trimming can be facilitated and also made cheaper. The specific texture that arises from the 3D printing process can also be used as a design element in order to provide different surface structures for example for light reflexions like a matt effect or shiny look. This texture can also be used as a functional element to grab more mascara and/or eyeshadow and/or any other cosmetic. Furthermore, the specific micro structure of the 3D printed eyelashes can be used so that the bending of the eyelashes towards a specific direction is enhanced. Usually, a bending upwards for more curl of the eyelashes is preferred.

Additionally, it is preferred that the eyelash band and the artificial eyelashes are produced together by two component 3D printing, so that the artificial eyelashes are - above their root area - made from a different material compared to the eyelash band.

This makes it possible to form the eyelashes out of a different material and give it different properties in order to ensure a variety of design possibilities.

The root area is the area in which the artificial eyelashes meet the eyelash band. "Above the root area" is therefore preferably in a distance of at least 1 mm, preferably even at least 3 mm from the eyelash band in the direction of the eyelash.

It is also preferred that the eyelash band is designed to be so wide that it can be applied in such a way that it has a shaping and/or lifting effect on the eyelid. The eyelash band therefore is attached to the eyelid with a comparably (compared with the state of the art) big area which gives the user the possibility to shape the eyelid in a desirable way.

It is also preferred that individual or all artificial eyelashes are connected to form a lattice structure. The specific form of the artificial eyelashes in combination with possible material choices make it possible to allow interconnections between the eyelashes for example through additional lines between the eyelashes in order to allow a lattice structure. This lattice structure can be used as a design element itself or a support structure for other design elements.

A preferred aspect for which protection is sought for (alone and in combination with other claims) is the use of a 3-D-printer to print an interconnection between an artificial eyelash and an eyelash band which is fixing the artificial eyelash in a position so that its root is distanced from all of the other roots of neighboured artificial eyelashes. That way it becomes possible, too, but not only, to place an existing fiber forming an artificial eyelash totally separately from other such fibers on the eyelash band. Even if it is advantageous to use an already existing fiber for that type of interconnection it can also be applied to fix a fiber that is itself to be printed afterwards.

A preferred aspect for which protection is sought for (alone and in combination with other claims) is a method to produce an eyelash band carrying artificial eyelashes characterized in that each single artificial eyelash is interconnected with the eyelash band by means of 3-D-printing operation.

Further possible configurations, functions and advantages result from the dependent claims and/or the following description of the preferred embodiment and/or with reference to the figures.

### FIGURE LIST

Figure 1 shows a first embodiment of the trimming according to the invention as a sketch with artificial eyelashes projecting from the eyelash band in three-dimensional view.
Figure 2 shows a second embodiment of the trimming according to the invention as a sketch with artificial eyelashes projecting from the eyelash band in three-dimensional view.
Figure 3 shows an eye in front view equipped with two trimmings in the form of a third embodiment.
Figure 4 shows an eye in front view equipped with two trimmings in the form of a fourth embodiment.
Figure 5 shows an eye in front view equipped with two trimmings in the form of a fifth embodiment.
Figure 6 shows an eye in front view equipped with two trimmings in the form of a sixth embodiment.
Figure 7 shows an eye in front view equipped with two trimmings in the form of a seventh embodiment.

### PREFERRED EMBODIMENTS

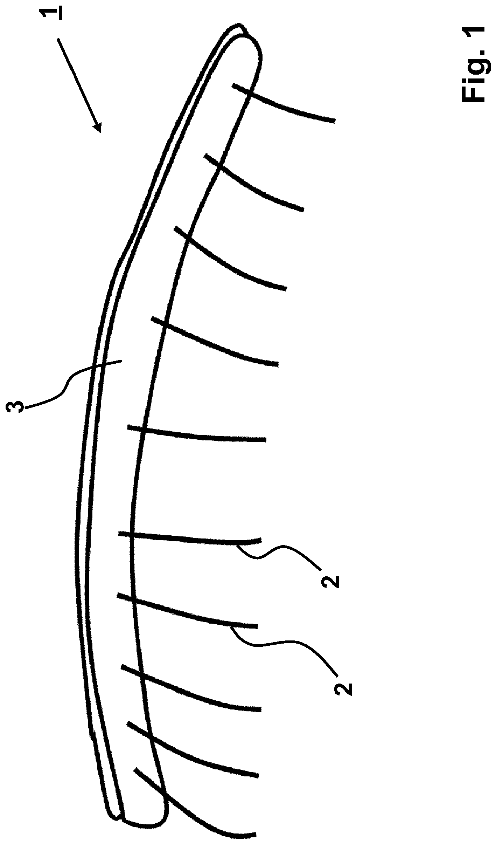

Figure 1 shows a first embodiment of the trimming 1 as a sketch with artificial eyelashes 2 projecting from the eyelash band 3. The individual artificial eyelashes 2 are positioned individually and at a distance from one another on the eyelash band 3. Preferably, the artificial eyelashes 2 are an integral part of the eyelash band 3. Furthermore, it is preferred that the artificial eyelashes 2 are made of the same material as the eyelash band 3 or at least in the transition area between the eyelash band 3 and the respective artificial eyelash 2.

The eyelash band 3 preferably is a flat band or tape which, in the applied state, has an extension in the direction of the surface of the eyelid 4 which is at least four times greater than its thickness in the direction perpendicular to the surface of the eyelid 4. In figure 1, the area which is applied to the eyelid is the area facing away from viewer and therefore the area opposing to the area the eyelashes 2 are projecting from.

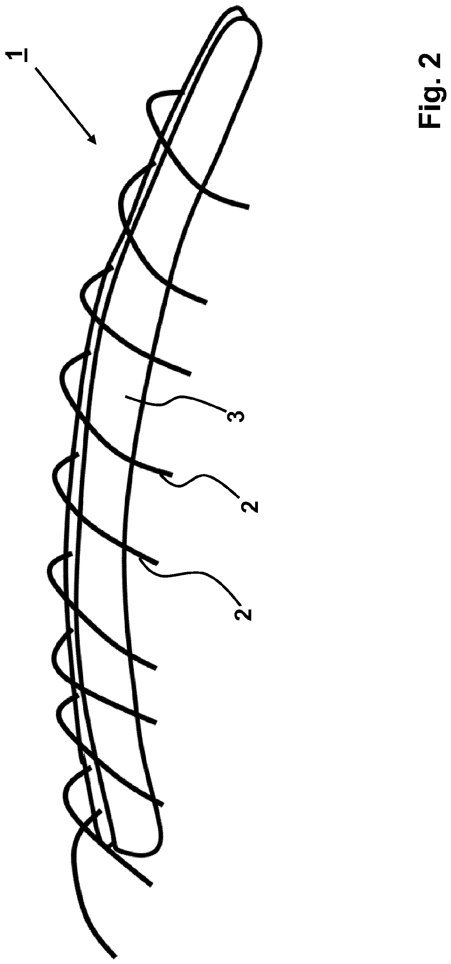

Figure 2 show analogously to figure 1 a second embodiment of the trimming 1 as a sketch, but with the artificial eyelashes 2 projecting from the eyelash band 3 from a narrow side of the eyelash band 3.

Overall, the eyelash band 3 and the artificial eyelashes 2 are preferably produced together by 3D printing and have a surface texture, each which makes the 3D printing visible. It is also possible that the eyelash band 3 and the eyelashes 2 are produced together by two component 3D printing, so that the artificial eyelashes 2 are - above their root area - made from a different material compared to the eyelash band 3.

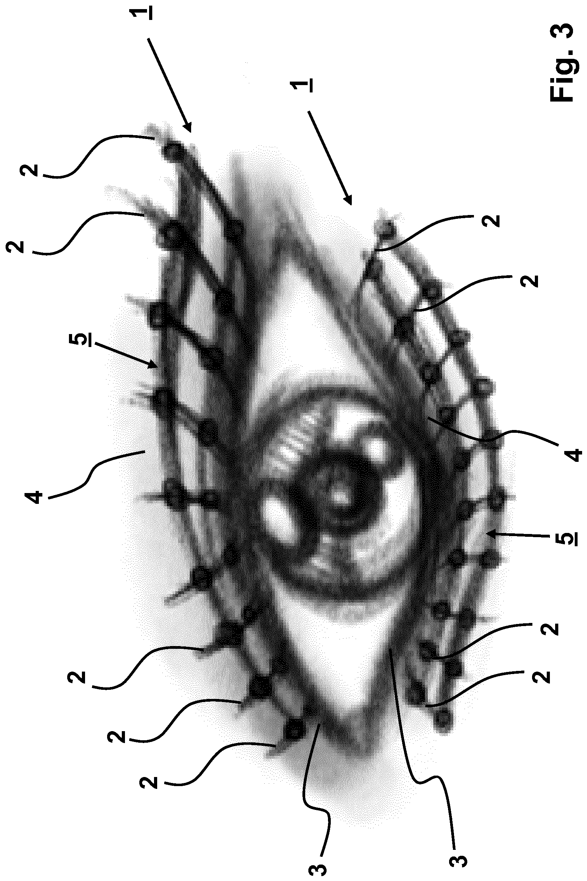

Figure 3 shows an eye in front view equipped with two trimmings 1 in the form of a third embodiment applied as intended on the upper and lower eyelid 4. Here, the eyelashes 2 are connected in order to form a lattice structure 5. This connection between the eyelashes 2 are preferably made by connecting threads and/or filaments and/or lashes, preferably in a vertical orientation to the original artificial eyelashes 2. Therefore, the artificial eyelashes 2 can consist of a grid of vertical and horizontal structures, preferably filaments and/or threads. Yet again, the individual artificial eyelashes 2 are positioned individually and at a distance from one another on the eyelash band 3

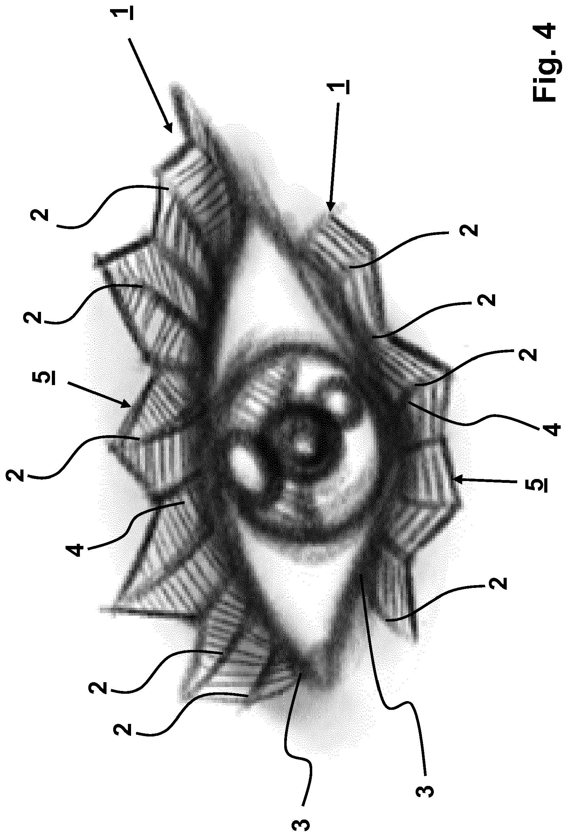

Figure 4 shows analogously to Figure 4 an eye in front view equipped with two trimmings 1 in the form of a fourth embodiment applied as intended on the upper and lower eyelid 4. Here, the lattice structure 4 is built by artificial eyelashes 2 that are positioned individually and at a distance from one another on the eyelash band 3 and that are of different lengths. These artificial eyelashes 2 are once more connected by connecting threads and/or filaments and/or lashes, in this case also the tips of the artificial eyelashes 2 are connected to the neighbouring eyelashes 2 in order to form this fan-like structure shown in Fig. 4.

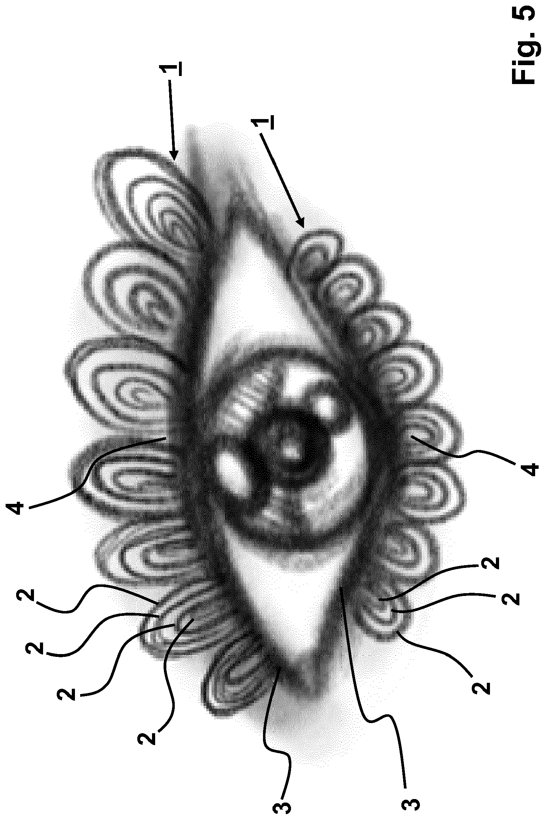

Figure 5 shows an eye in front view equipped with two trimmings 1 in the form of a fifth embodiment applied as intended on the upper and lower eyelid 4. Here, the artificial eyelashes 2 are designed as loops that touch the eyelash band 3 at at least two different points. There are several loops inside of each other and also next to each other in order to form this spiral-like structure shown in Fig. 5. The artificial eyelashes 2 are yet again positioned individually and at a distance from one another on the eyelash band 3.

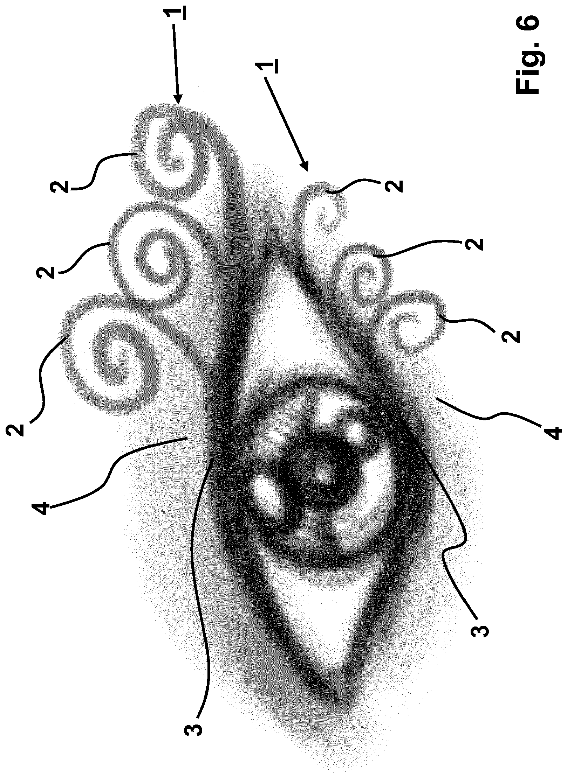

Figure 6 shows an eye in front view equipped with two trimmings 1 in the form of a sixth embodiment applied as intended on the upper and lower eyelid 4. Here, the trimming 1 comprises additional applications towards the outside of the eye corner. The individual eyelashes 2 are therefore formed in the shape of a spiral. Yet again, the eyelashes 2 are positioned individually and at a distance from one another on the eyelash band 3.

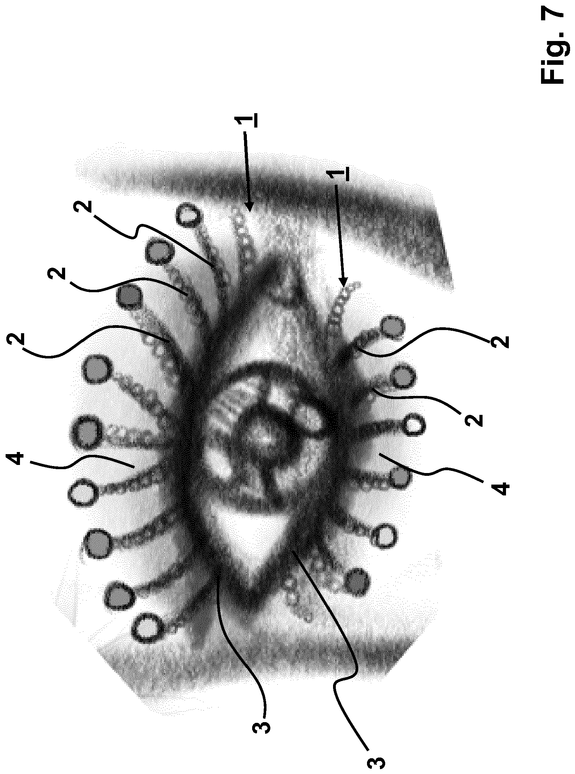

Figure 7 shows an eye in front view equipped with two trimmings 1 in the form of a seventh embodiment applied as intended on the upper and lower eyelid 4. The eyelashes 2 can be formed out of adjacent little rings or also other structures. Here, the artificial eyelashes 2 comprise a ball like tip.

### REFERENCE LIST

- 1: Trimming
- 2: Eyelash
- 3: Eyelash band
- 4: Eyelid
- 5: Lattice structure

## Claims

1. Trimming (1) of artificial eyelashes (2) consisting of an eyelash band (3) for fastening the trimming (1) to the eyelid (4) and artificial eyelashes (2) projecting therefrom, **characterized in that** the artificial eyelashes (2) are positioned individually and at a distance from one another on the eyelash band (3).

2. Trimming (1) of artificial eyelashes (2) according to claim 1, **characterized in that** the artificial eyelashes (2) are an integral part of the eyelash band (3).

3. Trimming (1) of artificial eyelashes (2) according to claim 1 or 2, **characterized in that** the artificial eyelashes (2) are made of the same material as the eyelash band (3).

4. Trimming (1) of artificial eyelashes (2) according to one of the preceding claims, **characterized in that** the respective artificial eyelash (2) - at least in the transition area between the eyelash band and the respective artificial eyelash (2) - consists of the same material as the eyelash band (3).

5. Trimming (1) of artificial eyelashes (2) according to one of the preceding claims, **characterized in that** the eyelash band (3) is a flat band or tape which, in the applied state, has an extension in the direction of the surface of the eyelid (4) which is at least four times greater than its thickness in the direction perpendicular to the surface of the eyelid (4).

6. Trimming (1) of artificial eyelashes (2) according to one of the preceding claims, **characterized in that** the eyelash band (3) is a flat band and the artificial eyelashes project from a narrow side of the eyelash band (3).

7. Trimming (1) of artificial eyelashes (2) according to one of the preceding claims, **characterized in that** the eyelash band (3) and the artificial eyelashes (2) are produced together by 3D printing and have a surface texture, each which makes the 3D printing visible.

8. Trimming (1) of artificial eyelashes (2) according to one of the preceding claims, **characterized in that** the eyelash band (3) and the artificial eyelashes (2) are produced together by two component 3D printing, so that the artificial eyelashes (2) are - above their root area - made from a different material compared to the eyelash band (3).

9. Trimming (1) of artificial eyelashes (2) according to one of the preceding claims, **characterized in that** the eyelash band (3) is designed to be so wide that it can be applied in such a way that it has a shaping and/or lifting effect on the eyelid (4).

10. Trimming (1) of artificial eyelashes (2) according to one of the preceding claims, **characterized in that** individual or all artificial eyelashes (2) are connected to form a lattice structure (5).

11. Trimming (1) of artificial eyelashes (2) according to the preceding claims, **characterized in that** the connection to form a lattice structure (5) is made by connecting threads and/or filaments and/or lashes, preferably in a vertical orientation to the original artificial eyelashes (2).

12. Trimming (1) of artificial eyelashes (2) according to one of the preceding claims, **characterized in that** individual or all artificial eyelashes (2) are designed as loops and/or triangles and/or other geometries that touch the eyelash band (3) at at least two different points.

13. Trimming (1) of artificial eyelashes (2) according to one of the preceding claims, **characterized in that** individual or all artificial eyelashes (2) comprise a ball like tip.

14. Trimming (1) of artificial eyelashes (2) according to one of the preceding claims, **characterized in that** individual or all artificial eyelashes (2) comprise additional applications - preferably especially towards the outside of the eye corner.

15. Trimming (1) of artificial eyelashes (2) according to one of the preceding claims, **characterized in that** artificial eyelashes (2) can consist of a grid of vertical and horizontal structures, preferably filaments and/or threads.

16. Use of a 3-D-Printer to print an interconnection between an artificial eyelash (2) and an eyelash band (3) which is fixing the artificial eyelash (2) in a position so that its root is distanced from all of the other roots of neighboured artificial eyelashes (2).

17. Method to produce an eyelash band (3) carrying artificial eyelashes (2) **characterized in that** each single artificial eyelash (2) is interconnected with the eyelash band (3) by means of 3-D-printing operation.
